# EUROPEAN PATENT SPECIFICATION

(11) **EP 3 552 527 B1**
(45) Date of publication and mention of the grant of the patent: **13.01.2021**
(21) Application number: 19167593.3
(22) Date of filing: 05.04.2019
(51) Int. Cl.: A47J 27/21, A47J 36/10

(54) **KETTLE LID AND KETTLE WITH SAME**
WASSERKOCHERDECKEL UND WASSERKOCHER DAMIT
COUVERCLE DE BOUILLOIRE ET BOUILLOIRE LE COMPRENANT

(30) Priority: 09.04.2018 CN 201810309040
(43) Date of publication of application: 16.10.2019
(73) Proprietor: BSH Hausgeräte GmbH, 81739 München (DE)
(72) Inventor: Lu, Peng, Nanjing, 210046 (CN); Wu, Liansen, Nanjing, 210046 (CN); Xiong, Yingjie, Nanjing, 210046 (CN)

(56) References cited:
- EP-A1- 2 502 530
- CN-U- 204 218 706
- CN-U- 206 151 220

## Description

### BACKGROUND

### Technical Field

The present invention relates to a field of daily life articles, and in particular, to a kettle lid and a kettle with the kettle lid.

### Related Art

For a kettle, especially an electric kettle, made using the conventional art, a kettle lid is bonded with a kettle body and opened and closed by using a button. However, since the kettle lid and the kettle body are bonded, it is inconvenient to clean inside of the kettle.

A manufacturer provides a kettle with a detachable kettle lid, and the kettle lid and a kettle body are connected and disconnected by locking or unlocking the kettle lid. However, the structure is complicated, the cost is high, and the assembly is complicated.

CN 204 218 706 U discloses an example of a kettle lid.

### SUMMARY

The present invention is directed to provide a kettle lid that can be used conveniently and has a low cost and a kettle with the kettle lid.

To achieve the objective, according to an aspect of the present invention, a kettle lid is provided and can be used in various types of kettles, especially electric kettles.

The kettle lid according to the present invention includes an upper lid, a lower lid, a button, a push block assembly, a push block spring, and two sliding rod assemblies. The upper lid is snapped on the lower lid to form a housing of the kettle lid, the push block assembly, the push block spring, and the sliding rod assemblies are disposed in the housing; the upper lid is provided with a via and the button is disposed extending through the via; each of the sliding rod assemblies includes a siding rod that can radially extend out of the housing, the two sliding rod assemblies are respectively disposed at two sides of the push block assembly, and the push block assembly slidably coordinates with the sliding rod assemblies to drive sliding rods to radially extend and move. The push block assembly includes a push block body, an upper portion and a lower portion of the push block body being respectively connected to the button and the push block spring; and a locking rod, a first end of the locking rod being disposed on the lower lid, and a second end is disposed in a chute of the push block body and is driven by motion of the push block body to slide in the chute. When the second end is located at a first position, the siding rods are accommodated in the housing of the kettle lid.

When the second end slides to a second position, the second end is locked at the second position under action of a resilience force of the push block spring, and the siding rods extend out of the housing of the kettle lid.

When the kettle lid is in an opened state, the button applies no action force on the push block assembly, the second end of the locking rod is located at the first position and the push block spring is in a released state. At this time, the push block assembly and the sliding rod assemblies are connected but do not slidably coordinate with each other, and the sliding rods are accommodated in the housing of the kettle lid. When the kettle lid needs to be closed, the button applies an action force on the push block assembly, the push block assembly overcomes a resilience force of the push block spring to move downwards and slidably coordinates with the sliding rod assemblies, the second end of the locking rod slides in the chute till the second end is locked at the second position. At this time, the sliding rods extend out of side holes of the housing to be locked on an edge of a mouth of the kettle, and a user is restricted to pick up the kettle lid and cannot open the kettle lid.

Preferably, the second end is configured to be driven by the motion of the push block body to slide from the second position to the first position. When the kettle lid is closed, the second end of the locking rod is locked at the second position, and when the kettle lid needs to be opened again, the button presses the push block body to make the second end slide from the second position to the first position

Preferably, the chute includes a first slide rail and a second slide rail; and a cavity connected to the first slide rail and the second slide rail. The second position is disposed in the cavity; the second end is configured to enter the first slide rail from the first position and slide to the second position, and to slide from the second position into the second slide rail and return to the first position.

Preferably, the second slide rail is of a straight line design, the cavity is disposed in a V shape; and the straight line section of the first slide rail and the second slide rail are connected to the cavity. A V-shaped chute facilitates the second end of the locking rod to slide and be locked at a lowest point in the V-shaped chute.

Preferably, the bent section and the straight line section of the first slide rail, the second slide rail, and the cavity form a cyclic loop for the second end to slide. The cyclic loop coordinates with the opened state and the closed state of the kettle lid.

Preferably, the first end of the locking rod is provided with a rotating shaft mounted to a mounting opening at a bottom portion of the lower lid; and the second end of the locking rod is provided with a clamping hook, and the clamping hook is configured to lock the second end located at the second position to the position. Another locking device for locking the second end at the second position may also be provided, and the clamping hook may be more simple and efficient.

Preferably, the locking rod is configured to be capable of rotating by using the first end as a center, to coordinate with the second end to slide in the chute.

Preferably, a bottom portion of the lower lid is provided with a positioning pin, and the push block spring is sleeved over the positioning pin. Preferably, a bottom portion of the push block body s provided a groove, and an upper end of the push block spring is located below the groove. The design increases stability of the push block spring.

The present invention solves the problem that the structure of the kettle lid in the conventional art is complicated and has a high cost, and the kettle lid provided by the present invention has a simple structure, has good effects, can be installed and used conveniently, and has a low cost.

### BRIEF DESCRIPTION OF THE DRAWINGS

The accompanying drawings herein are used to provide further understanding of the present invention and constitute one part of the present application, the exemplary embodiments and description of the present invention are used to interpret the present invention and do not constitute inappropriate limitation on the present invention, wherein:
FIG. 1 is a schematic three-dimensional exploded diagram of the kettle lid;
FIG. 2 is a schematic structural diagram of a kettle lid in an opened state; and
FIG. 3 is a schematic structural diagram of a kettle lid in a closed state.

### List of reference numerals

1. Kettle lid
2. Upper lid
3. Lower lid
4. Button
5. Push block assembly
6. Push block spring
7. Sliding rod assembly
8. Side hole
9. Push block body
10. Housing
11. Sliding rod
12. Chute
20. Via

### DETAILED DESCRIPTION

The present invention is described in detail by using embodiments with reference to the accompanying drawings. It should be noted that, in a situation that no conflict occurs, the embodiments of the present application and the features in the embodiments may be combined.

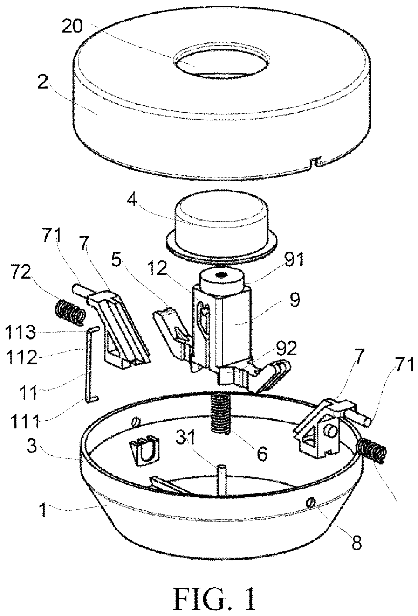

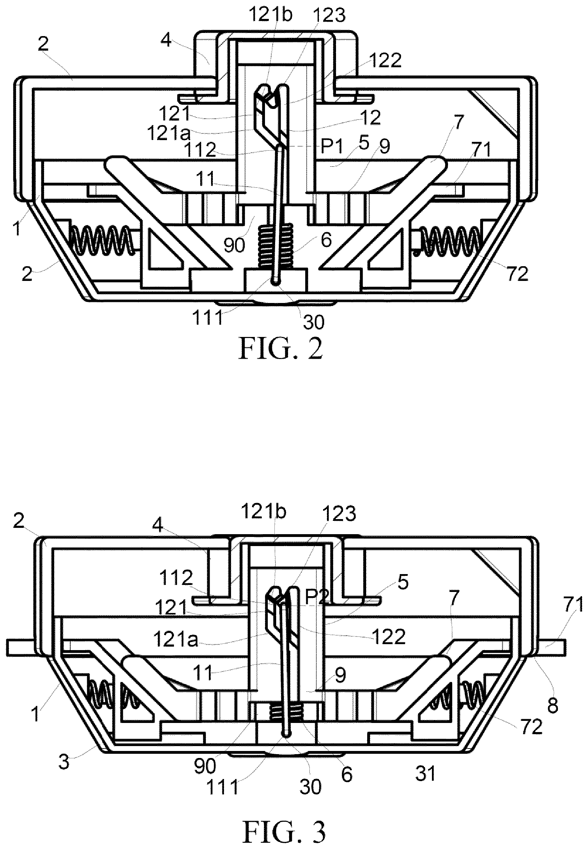

This embodiment provides a kettle lid that may be applied in various types of kettles. FIG. 1 is a schematic three-dimensional exploded diagram of the kettle lid, FIG. 2 is a schematic structural diagram of a kettle lid in an opened state, and FIG. 3 is a schematic structural diagram of a kettle lid in a closed state. As shown in FIG. 1, FIG. 2, and FIG. 3.

The kettle lid 1 includes an upper lid 2, a lower lid 3, a button 4, a push block assembly 5, a push block spring 6, and two sliding rod assemblies 7. The upper lid 2 is snapped on the lower lid 3 to form a housing 10 of the kettle lid 1. The upper lid 2 is provided with a via 20, and the button 4 is disposed extending through the via 20. The push block assembly 5, the push block spring 6, and the sliding rod assemblies 7 are disposed in the housing 10.

Each of the slide rod assemblies 7 includes a siding rod 71 that can radially extend out of the housing 10, the two sliding rod assemblies 7 are respectively disposed at two sides of the push block assembly 5, and the push block assembly 5 slidably coordinates with the sliding rod assemblies 7 to drive the sliding rods 71 to radially extend and move.

The push block assembly 5 includes a push block body 9, an upper portion 91 and a lower portion 92 of the push block body 9 being respectively connected to the button 4 and the push block spring 6; and a locking rod 11. A first end 111 of the locking rod 11 is disposed on the lower lid 3, and a second end 112 is disposed in a chute 12 of the push block body 9 and is driven by motion of the push block body 9 to slide in the chute 12.

When the second end 112 is located at a first position P1, the siding rods 71 are accommodated in the housing 10 of the kettle lid 1; and when the second end 112 slides to a second position P2, the second end 112 is locked at the second position P2 under action of a resilience force of the push block spring 6, and the siding rods 71 extend out of the housing 10.

When the kettle lid 1 is in an opened state, the button 4 applies no action force on the push block assembly 5, the second end 112 of the locking rod 11 is located at the first position P1 and the push block spring 6 is in a released state. At this time, the push block assembly 5 and the sliding rod assemblies 7 are connected but do not slidably coordinate with each other, and the sliding rods 71 are accommodated in the housing 10 of the kettle lid 1.

When the kettle lid 1 needs to be closed, the button 4 applies an action force on the push block assembly 5, the push block assembly 5 overcomes a resilience force of the push block spring 6 to move downwards and slidably coordinates with the sliding rod assemblies 7, the second end 112 of the locking rod 11 slides in the chute till the second end 112 is locked at the second position P2. At this time, the sliding rods 71 extend out of side holes 8 of the housing 10 to be locked on an edge of a mouth (not shown) of the kettle, as shown in FIG. 3, and a user is restricted to pick up the kettle lid and cannot open the kettle lid.

Specifically, the first end 111 of the locking rod 11 is provided with a rotating shaft mounted to a mounting opening 30 at a bottom portion of the lower lid 3; and the second end 112 of the locking rod 11 is provided with a clamping hook 113, the clamping hook 113 is configured to lock the second end 112 located at the second position P2 to the position. The locking rod 11 is configured to be capable of rotating by using the first end 111 as a center, to coordinate with the second end 112 to slide in the chute 12.

Furthermore, the bottom portion of the lower lid 3 is provided with a positioning pin 31, and the push block spring 6 is sleeved over the positioning pin 31. A bottom portion of the push block body 9 is provided with a groove 90, and an upper end of the push block spring 6 is located below the groove 90.

Preferably, the second end 112 is configured to be driven by the motion of the push block body 9 to slide from the second position P2 to the first position P1. The clamping hook 113 of the second end 112 at the second position P2 is locked in the chute 12 under action of a resilience force of the push block spring 6. When the kettle lid 1 needs to be opened again, the button 4 further applies an action force on the push block body 9, the push block body 9 moves to make the second end 112 slide to leave the second position P2 and slide to the first position P1.

During a process that the second end 112 slides from the second position P2 where the second end 112 is locked to the first position P1, the push block body 9 moves upwards under action of a resilience force of the push block spring 6, a sliding rod spring 72 is disposed between each of the sliding rod assemblies 7 and the lower lid 3, when the push block body 9 moves upwards, the sliding rod assemblies 7 retract under action of a resilience force of the sliding rod springs 72, the sliding rods 71 retract into the housing 10, and at this time, a user is not restricted to pick up the kettle lid and can open the kettle lid. The sliding rod springs 72 are configured according to the conventional art and are not repeated herein.

Preferably, the chute 12 includes a first slide rail 121 and a second slide rail 122; and a cavity 123 connected to the first slide rail 121 and the second slide rail 122. The second position P2 is disposed in the cavity 123; the second end 112 is configured to enter the first slide rail 121 from the first position P1 and slide to the second position P2, and to slide from the second position P2 into the second slide rail 122 and return to the first position P1.

Preferably, the second slide rail 122 is of a straight line design, the cavity 123 is disposed in a V shape; and the straight line section 121b of the first slide rail 121 and the second slide rail 122 are connected to the cavity 123.

Specifically, the bent section 121a and the straight line section 121b of the first slide rail 121, the second slide rail 122, and the cavity 123 form a cyclic loop for the second end 112 to slide.

The foregoing description and various specific embodiments in the accompanying drawings are used to describe the present application, but are not all embodiments of the present invention.

## Claims

1. A kettle lid (1), comprising: an upper lid (2), a lower lid (3), a button (4), a push block assembly (5), a push block spring (6) and two sliding rod assemblies (7), wherein the upper lid (2) is snapped on the lower lid (3) to form a housing (10) of the kettle lid (1), the push block assembly (5), the push block spring (6) and the sliding rod assemblies (7) are disposed in the housing (10); the upper lid (2) is provided with a via (20) and the button (4) is disposed extending through the via (20); each of the sliding rod assemblies (7) comprises a sliding rod (71) that can radially extend out of the housing (10), the two sliding rod assemblies (7) are respectively disposed at two sides of the push block assembly (5), and the push block assembly (5) slidably coordinates with the sliding rod assemblies (7) to drive sliding rods (71) to radially extend and move; wherein the push block assembly (5) comprises:
a push block body (9), wherein an upper portion (91) and a lower portion (92) of the push block body (9) are respectively connected to the button (4) and the push block spring (6);
**characterized in that** the push block assembly (5) further comprises:
a locking rod (11), wherein a first end (111) of the locking rod (11) is disposed on the lower lid (3), and a second end (112) is disposed in a chute (12) of the push block body (9) and is driven by motion of the push block body (9) to slide in the chute (12), wherein
when the second end (112) is located at a first position, the siding rod (71) is accommodated in the housing (10) of the kettle lid (1); and
when the second end (112) slides to a second position, the second end (112) is locked at the second position under action of a resilience force of the push block spring (6), and the siding rods (71) extend out of the housing (10) of the kettle lid (1).

2. The kettle lid according to claim 1, **characterized in that**
the second end (112) is configured to be driven by the motion of the push block body (9) to slide from the second position to the first position.

3. The kettle lid according to claim 1 or 2, **characterized in that** the chute (12) comprises:
a first slide rail (121) and a second slide rail (122); and
a cavity (123) connected to the first slide rail (121) and the second slide rail (122), wherein the second position is disposed in the cavity (123); wherein
the second end (112) is configured to enter the first slide rail (121) from the first position and slide to the second position, and to slide from the second position into the second slide rail (122) and return to the first position.

4. The kettle lid according to claim 3, **characterized in that**
the first slide rail (121) is provided with a bent section (121a) and a straight line section (121b);
the second slide rail (122) is of a straight line design;
the cavity (123) is disposed in a V shape; and
the straight line section (121b) of the first slide rail (121) and the second slide rail (122) are connected to the cavity (123).

5. The kettle lid according to claim 4, **characterized in that**
the bent section (121a) and the straight line section (121b) of the first slide rail (121), the second slide rail (122), and the cavity (123) form a cyclic loop for the second end (112) to slide.

6. The kettle lid according to claim 1, **characterized in that**
the first end (111) of the locking rod (11) is provided with a rotating shaft mounted to a mounting opening (30) at a bottom portion of the lower lid (3); and
the second end (112) of the locking rod (11) is provided with a clamping hook (113), wherein the clamping hook (113) is configured to lock the second end (112) located at the second position to the position.

7. The kettle lid according to claim 1, **characterized in that**
the locking rod (11) is configured to be capable of rotating by using the first end (111) as a center, to coordinate with the second end (112) to slide in the chute (12).

8. The kettle lid according to claim 1, **characterized in that**
a bottom portion of the lower lid (3) is provided with a positioning pin (31), and the push block spring (6) is sleeved over the positioning pin (31).

9. The kettle lid according to claim 1, **characterized in that**
a bottom portion of the push block body (9) is provided a groove (90), and an upper end of the push block spring (6) is located below the groove (90).

10. A kettle, **characterized in that** the kettle comprises a kettle lid according to any one of claims 1 to 9.

## Patentansprüche

1. Wasserkocherdeckel (1), der Folgendes umfasst: einen oberen Deckel (2), einen unteren Deckel (3), einen Druckknopf (4), eine Schiebeblockbaugruppe (5), eine Schiebeblockfeder (6) und zwei verschiebbare Stangenbaugruppen (7), wobei der obere Deckel (2) so auf den unteren Deckel (3) aufgesteckt ist, dass ein Gehäuse (10) des Wasserkocherdeckels (1) entsteht, wobei die Schiebeblockbaugruppe (5), die Schiebeblockfeder (6) und die verschiebbaren Stangenbaugruppen (7) in dem Gehäuse (10) angeordnet sind, wobei der obere Deckel (2) mit einer durchgehenden Öffnung (20) versehen ist und der Druckknopf (4) so angeordnet ist, dass er sich durch die durchgehende Öffnung (20) erstreckt, wobei jede der verschiebbaren Stangenbaugruppen (7) eine verschiebbare Stange (71) umfasst, die radial aus dem Gehäuse (10) ausfahren kann, wobei die beiden verschiebbaren Stangenbaugruppen (7) jeweils auf zwei Seiten der Schiebeblockbaugruppe (5) angeordnet sind und die Schiebeblockbaugruppe (5) verschiebbar so mit den verschiebbaren Stangenbaugruppen (7) zusammenwirkt, dass sie die verschiebbaren Stangen (71) dazu veranlasst, radial auszufahren und sich zu bewegen,
wobei die Schiebeblockbaugruppe (5) Folgendes umfasst:
einen Schiebeblockkörper (9), wobei ein oberer Teil (91) und ein unterer Teil (92) des Schiebeblockkörpers (9) mit dem Druckknopf (4) beziehungsweise der Schiebeblockfeder (6) verbunden ist,
**dadurch gekennzeichnet, dass** die Schiebeblockbaugruppe (5) ferner Folgendes umfasst:
eine Sicherungsstange (11), wobei ein erstes Ende (111) der Sicherungsstange (11) an dem unteren Deckel (3) angeordnet ist und ein zweites Ende (112) in einer Rinne (12) des Schiebeblockkörpers (9) angeordnet ist und durch eine Bewegung des Schiebeblockkörpers (9) zum Gleiten in der Rinne (12) veranlasst wird,
wobei
die verschiebbare Stange (71), wenn sich das zweite Ende (112) in einer ersten Position befindet, in dem Gehäuse (10) des Wasserkocherdeckels (1) untergebracht ist und
das zweite Ende (112), wenn es in eine zweite Position gleitet, unter Einfluss einer Federkraft der Schiebeblockfeder (6) in der zweiten Position gesichert wird und die verschiebbaren Stangen (71) aus dem Gehäuse (10) des Wasserkocherdeckels (1) ausfahren.

2. Wasserkocherdeckel nach Anspruch 1, **dadurch gekennzeichnet, dass** das zweite Ende (112) so konfiguriert ist, dass es durch die Bewegung des Schiebeblockkörpers (9) dazu veranlasst wird, aus der zweiten in die erste Position zu gleiten.

3. Wasserkocherdeckel nach Anspruch 1 oder 2, **dadurch gekennzeichnet, dass** die Rinne (12) Folgendes umfasst:
eine erste Gleitschiene (121) und eine zweite Gleitschiene (122) und
einen Hohlraum (123), der mit der ersten Gleitschiene (121) und der zweiten Gleitschiene (122) verbunden ist,
wobei die zweite Position in dem Hohlraum (123) angeordnet ist, wobei das zweite Ende (112) so konfiguriert ist, dass es aus der ersten Position in die erste Gleitschiene (121) eintritt und in die zweite Position gleitet und aus der zweiten Position in die zweite Gleitschiene (122) gleitet und in die erste Position zurückkehrt.

4. Wasserkocherdeckel nach Anspruch 3, **dadurch gekennzeichnet, dass**
die erste Gleitschiene (121) mit einem gekrümmten Abschnitt (121a) und einem geradlinigen Abschnitt (121b) versehen ist,
die zweite Gleitschiene (122) eine geradlinige Gestalt aufweist,
der Hohlraum (123) in einer V-Form angeordnet ist und
der geradlinige Abschnitt (121b) der ersten Gleitschiene (121) und die zweite Gleitschiene (122) mit dem Hohlraum (123) verbunden sind.

5. Wasserkocherdeckel nach Anspruch 4, **dadurch gekennzeichnet, dass**
der gekrümmte Abschnitt (121a) und der geradlinige Abschnitt (121b) der ersten Gleitschiene (121), die zweite Gleitschiene (122) und der Hohlraum (123) eine zyklische Schleife bilden, in der das zweite Ende (112) gleiten kann.

6. Wasserkocherdeckel nach Anspruch 1, **dadurch gekennzeichnet, dass**
das erste Ende (111) der Sicherungsstange (11) mit einer sich drehenden Welle versehen ist, die an einer Montageöffnung (30) an einem unteren Teil des unteren Deckels (3) angebracht ist, und
das zweite Ende (112) der Sicherungsstange (11) mit einem Klemmhaken (113) versehen ist, wobei der Klemmhaken (113) so konfiguriert ist, dass er das zweite Ende (112), das sich in der zweiten Position befindet, in der Position sichert.

7. Wasserkocherdeckel nach Anspruch 1, **dadurch gekennzeichnet, dass**
die Sicherungsstange (11) so konfiguriert ist, dass sie in der Lage ist sich zu drehen, indem sie das erste Ende (111) als Mittelpunkt benutzt, und so mit dem zweiten Ende (112) zusammenwirkt, dass es in der Rinne (12) gleitet.

8. Wasserkocherdeckel nach Anspruch 1, **dadurch gekennzeichnet, dass**
ein unterer Teil des unteren Deckels (3) mit einem Positionsstift (31) versehen und die Schiebeblockfeder (6) über den Positionsstift (31) gestreift ist.

9. Wasserkocherdeckel nach Anspruch 1, **dadurch gekennzeichnet, dass**
ein unterer Teil des Schiebeblockkörpers (9) mit einer Nut (90) versehen ist und sich ein oberes Ende der Schiebeblockfeder (6) unterhalb der Nut (90) befindet.

10. Wasserkocher, **dadurch gekennzeichnet, dass** er einen Wasserkocherdeckel nach einem der Ansprüche 1 bis 9 umfasst.

## Revendications

1. Couvercle de bouilloire (1), comprenant : un couvercle supérieur (2), un couvercle inférieur (3), un bouton (4), un ensemble bloc de poussée (5), un ressort de bloc de poussée (6) et deux ensembles tige coulissante (7), dans lequel le couvercle supérieur (2) est encliqueté sur le couvercle inférieur (3) pour former un logement (10) du couvercle de bouilloire (1), l'ensemble bloc de poussée (5), le ressort de bloc de poussée (6) et les ensembles tige coulissante (7) sont disposés dans le boîtier (10) ; le couvercle supérieur (2) est muni d'un trou traversant (20) et le bouton (4) est disposé en s'étendant à travers le trou traversant (20) ; chacun des ensembles tige coulissante (7) comprend une tige coulissante (71) qui peut s'étendre radialement hors du boîtier (10), les deux ensembles tige coulissante (7) sont respectivement disposés sur deux côtés de l'ensemble bloc de poussée (5), et l'ensemble bloc de poussée (5) se coordonne de manière coulissante avec les ensembles tige coulissante (7) pour entraîner les tiges coulissantes (71) afin qu'elles s'étendent et se déplacent radialement ; dans lequel l'ensemble bloc de poussée (5) comprend :
un corps de bloc de poussée (9), dans lequel une partie supérieure (91) et une partie inférieure (92) du corps de bloc de poussée (9) sont respectivement reliées au bouton (4) et au ressort de bloc de poussée (6) ;
**caractérisé en ce que** l'ensemble bloc de poussée (5) comprend en outre :
une tige de verrouillage (11), dans lequel une première extrémité (111) de la tige de verrouillage (11) est disposée sur le couvercle inférieur (3), et une seconde extrémité (112) est disposée dans une glissière (12) du corps de bloc de poussée (9) et est entraînée par un mouvement du corps de bloc de poussée (9) afin qu'elle coulisse dans la glissière (12), dans lequel lorsque la seconde extrémité (112) est située à une première position, la tige coulissante (71) est hébergée dans le logement (10) du couvercle de bouilloire (1) ; et lorsque la seconde extrémité (112) coulisse vers une seconde position, la seconde extrémité (112) est verrouillée à la seconde position sous l'action d'une force de résilience du ressort de bloc de poussée (6), et les tiges coulissantes (71) s'étendent hors du boîtier (10) du couvercle de bouilloire (1).

2. Couvercle de bouilloire selon la revendication 1, **caractérisé en ce que**
la seconde extrémité (112) est configurée pour être entraînée par le mouvement du corps de bloc de poussée (9) afin qu'elle coulisse de la seconde position à la première position.

3. Couvercle de bouilloire selon la revendication 1 ou 2, **caractérisé en ce que** la glissière (12) comprend :
un premier rail de coulissement (121) et un second rail de coulissement (122) ; et
une cavité (123) reliée au premier rail de coulissement (121) et au second rail de coulissement (122), dans lequel la seconde position est disposée dans la cavité (123) ; dans lequel
la seconde extrémité (112) est configurée pour entrer dans le premier rail de coulissement (121) à partir de la première position et coulisser vers la seconde position, et pour coulisser à partir de la seconde position dans le second rail de coulissement (122) et revenir à la première position.

4. Couvercle de bouilloire selon la revendication 3, **caractérisé en ce que**
le premier rail de coulissement (121) est muni d'une section incurvée (121a) et d'une section en ligne droite (121b) ;
le second rail de coulissement (122) présente une conception en ligne droite ; la cavité (123) est disposée selon une géométrie en V ; et
la section en ligne droite (121b) du premier rail de coulissement (121) et le second rail de coulissement (122) sont reliés à la cavité (123).

5. Couvercle de bouilloire selon la revendication 4, **caractérisé en ce que**
la section incurvée (121a) et la section en ligne droite (121b) du premier rail de coulissement (121), le second rail de coulissement (122) et la cavité (123) forment une boucle cyclique pour que la seconde extrémité (112) coulisse.

6. Couvercle de bouilloire selon la revendication 1, **caractérisé en ce que**
la première extrémité (111) de la tige de verrouillage (11) est munie d'un arbre rotatif monté sur une ouverture de montage (30) au niveau d'une partie basse du couvercle inférieur (3) ; et
la seconde extrémité (112) de la tige de verrouillage (11) est munie d'un crochet de serrage (113), dans lequel le crochet de serrage (113) est configuré pour verrouiller la seconde extrémité (112) située à la seconde position dans la position.

7. Couvercle de bouilloire selon la revendication 1, **caractérisé en ce que** la tige de verrouillage (11) est configurée pour être capable de tourner en utilisant la première extrémité (111) comme centre, pour se coordonner avec la seconde extrémité (112) afin qu'elle coulisse dans la glissière (12).

8. Couvercle de bouilloire selon la revendication 1, **caractérisé en ce que**
une partie basse du couvercle inférieur (3) est munie d'une goupille de positionnement (31), et le ressort de bloc de poussée (6) est emmanché sur la goupille de positionnement (31).

9. Couvercle de bouilloire selon la revendication 1, **caractérisé en ce que**
une partie basse du corps de bloc de poussée (9) est munie d'une rainure (90) et une extrémité supérieure du ressort de bloc de poussée (6) est située en dessous de la rainure (90).

10. Bouilloire, **caractérisée en ce que** la bouilloire comprend un couvercle de bouilloire selon l'une quelconque des revendications 1 à 9.
